# EUROPEAN PATENT SPECIFICATION

(11) **EP 3 686 040 B1**
(45) Date of publication and mention of the grant of the patent: **30.06.2021**
(21) Application number: 20151123.5
(22) Date of filing: 10.01.2020
(51) Int. Cl.: B60H 1/00, B60H 1/24

(54) **VEHICULAR DUCT APPARATUS**
FAHRZEUGKANALVORRICHTUNG
APPAREIL DE CONDUIT DE VÉHICULE

(30) Priority: 25.01.2019 JP 2019011374
(43) Date of publication of application: 29.07.2020
(73) Proprietor: Valeo Japan Co., Ltd., Kumagaya-shi, Saitama 360-0193 (JP)
(72) Inventor: ARAKI, Daisuke, SAITAMA, 360-0193 (JP)
(74) Representative: Tran, Chi-Hai

(56) References cited:
- WO-A1-2018/108369
- FR-A1- 2 814 703
- US-A- 5 137 491

## Description

### BACKGROUND OF THE INVENTION

### 1. Field of the Invention

The present invention relates to a vehicular duct apparatus.

### 2. Description of the Related Art

In most cases, a vehicle includes a vehicular air conditioner to control air temperature in a cabin. Air that has been controlled in temperature in a main body of the air conditioner is blown into the cabin through a vehicular duct. A duct apparatus including such a vehicular duct is disclosed in Patent Document 1.

As disclosed in Patent Document 1, the vehicular duct apparatus includes a first duct, a second duct, and an airflow rate regulating door. The first duct constitutes a first airflow passage. The second duct extends along the first duct and constitutes a second airflow passage. The airflow rate regulating door turns to regulate flowing rates of the air flowing through the first airflow passage and the second airflow passage.

With the vehicular duct apparatus disclosed in Patent Document 1, the air having different flowing rates can be blown through the two airflow passages. For example, the air can be blown toward a seat where a vehicle occupant is seated whereas blowing the air toward an empty seat can be stopped. That is, the air can be effectively blown toward positions as needed.

Patent Literature 1: JP-A-2005-214541

Irradiated with radiant heat from the sun, for example, the cabin is apt to have a high temperature. This necessitates the vehicular air conditioner to blow a great amount of air into the cabin to quickly cool the interior of the cabin in certain circumstances, for example, immediately after the vehicle has been boarded.

An airflow rate is the product of a passage area and an airflow speed. In order to blow a great amount of air, a large passage area is preferable. In the vehicular duct apparatus disclosed in Patent Document 1, when one of the airflow passages is fully open, the other airflow passage is fully closed, and when one of the airflow passages is half open, the other airflow passage is half open. That is, the airflow passages have no occasion to be both fully open. There is still room for improvement in this respect to maximize airflow rates of the vehicular duct apparatus. FR 2814703 A1 describes a vehicular duct apparatus having a first duct comprising a first airflow passage and a second duct comprising a second airflow passage and an airflow rate regulating door comprising a turning shaft, a first plate extending from the turning shaft and a second plate extending from the turning shaft at a different extending angle with respect to the first plate, wherein the airflow rate regulating door is turnable for regulating the airflow rates in the airflow passages of the two ducts. US 5137491 A describes a vehicle air spout device including a plurality of ducts in which airflow rates in the airflow passages of the ducts can be selectively regulated by an airflow rate regulating door comprising a plurality of plates. WO 2018/108369 A1 describes a vehicular duct apparatus including two ducts in which airflow rates in the airflow passages of the ducts can be selectively regulated by an airflow rate regulating door comprising two plates.

### SUMMARY OF THE INVENTION

In accordance with the present invention there is provided a vehicular duct apparatus as set out in independent claim 1. A preferred embodiment of the present invention is laid down in the appended dependent claim 2.

According to the invention, the first plate (52, 52A) and the second plate (53, 53A) are oriented in the same direction relative to the turning shaft (51, 51A). Therefore, the first plate (52, 52A) and the second plate (53, 53A) can be oriented along an air flowing direction to fully open the first airflow passage (Fp1) and the second airflow passage (Fp2) simultaneously.

When the airflow rate regulating door (50, 50A) is in the first position (P1), the first plate (52, 52A) has at least one end in contact with the inner wall surface of the first duct (30, 30A), and the second plate (53, 53A) has both ends apart from the inner wall surface of the second duct (40, 40A) . In other words, when the airflow rate regulating door (50, 50A) is in the first position (P1), the passage area of the first airflow passage (Fp1) defined by the first plate (52, 52A) and the inner wall surface of the first duct (30, 30A) is at the minimum (including 0). The passage area of the second airflow passage (Fp2) defined by the second plate (53, 53A) and the inner wall surface of the second duct (40, 40A) is larger than the passage area of the first airflow passage (Fp1). Meanwhile, when the airflow rate regulating door (50, 50A) is in the second position (P2), the passage area of the second airflow passage (Fp2) defined by the second plate (53, 53A) and the inner wall surface of the second duct (40, 40A) is at the minimum (including 0). The passage area of the first airflow passage (Fp1) defined by the first plate (52, 52A) and the inner wall surface of the first duct (30, 30A) is larger than the passage area of the second airflow passage (Fp2) . That is, the passage areas of the two airflow passages (Fp1 and Fp2) can be adjusted and made different from each other to regulate the airflow rates of the two airflow passages (Fp1 and Fp2).

The invention provides a vehicular duct apparatus in which the airflow rates of the two airflow passages can be regulated and made different from each other, but the two airflow passages can be made fully open in a specified case.

### BRIEF DESCRIPTION OF THE DRAWINGS

FIG. 1 is a diagram schematically illustrating a vehicle in which a vehicular duct apparatus according to a first embodiment is mounted.
FIG. 2 is a plan view of the vehicular duct apparatus illustrated in FIG. 1.
FIG. 3A is a cross-sectional view taken along line 3A-3A in FIG. 2.
FIG. 3B is an enlarged view of portion 3B of FIG. 3A.
FIG. 3C is an enlarged view of portion 3C of FIG. 3A.
FIG. 4A is a cross-sectional view taken along line 4A-4A in FIG. 2.
FIG. 4B is a cross-sectional view taken along line 4B-4B in FIG. 2.
FIG. 5 is a perspective view of an airflow rate regulating door illustrated in FIG. 3.
FIG. 6A is a diagram illustrating a function of a first duct when the airflow rate regulating door illustrated in FIG. 5 is in a fully open position.
FIG. 6B is a diagram illustrating a function of a second duct when the airflow rate regulating door illustrated in FIG. 5 is in the fully open position.
FIG. 7A is a diagram illustrating a function of the first duct when the airflow rate regulating door illustrated in FIG. 5 is in a second position.
FIG. 7B is a diagram illustrating a function of the second duct when the airflow rate regulating door illustrated in FIG. 5 is in the second position.
FIG. 8 is an exploded perspective view of a vehicular duct apparatus according to a second embodiment.
FIG. 9 is a perspective view of an airflow rate regulating door for the vehicular duct apparatus illustrated in FIG. 8.
FIG. 10A is a diagram illustrating a function when the airflow rate regulating door illustrated in FIG. 9 is in a first position.
FIG. 10B is a diagram illustrating a function when the airflow rate regulating door illustrated in FIG. 9 is in a fully open position.
FIG. 10C is a diagram illustrating a function when the airflow rate regulating door illustrated in FIG. 9 is in a second position.

### DESCRIPTION OF THE PREFERRED EMBODIMENTS

Embodiments of the invention will be described below with reference to the accompanying drawings. In the following description, "left and right" and "lateral" refer to the left and right as viewed from an occupant of a vehicle, and "front and rear" and "fore-and-aft" refer to the front and rear as viewed in a traveling direction of the vehicle. In the drawings, reference sign Fr denotes the front, Rr the rear, Le the left as viewed from the occupant, Ri the right as viewed from the occupant, Up the upper side, and Dn the lower side.

### First Embodiment

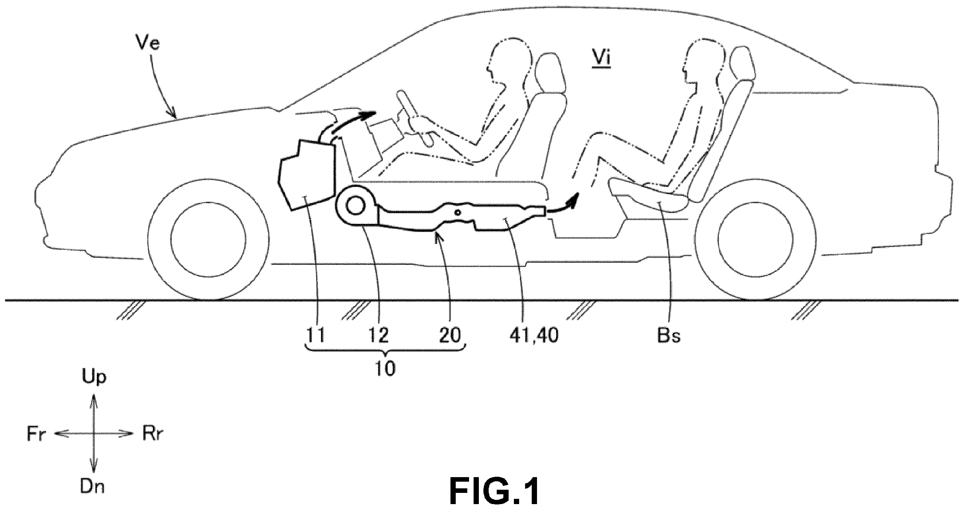

Refer to FIG. 1. A vehicular duct apparatus 20 (hereinafter simply referred to as "duct apparatus 20") is mounted in a vehicle Ve such as a passenger vehicle. The duct apparatus 20 constitutes part of a vehicular air conditioner 10 to control air temperature in a cabin Vi. The vehicular air conditioner 10 includes an air conditioner main body 11 to control the air temperature, a blower 12 to send air having the air temperature controlled in the air conditioner main body 11, and the duct apparatus 20 coupled to the blower 12 and extending toward back seats Bs.

Part of the air having the temperature controlled in the air conditioner main body 11 is sent toward the back seats Bs via the blower 12 and the duct apparatus 20.

Known devices may be employed for the air conditioner main body 11 and the blower 12.

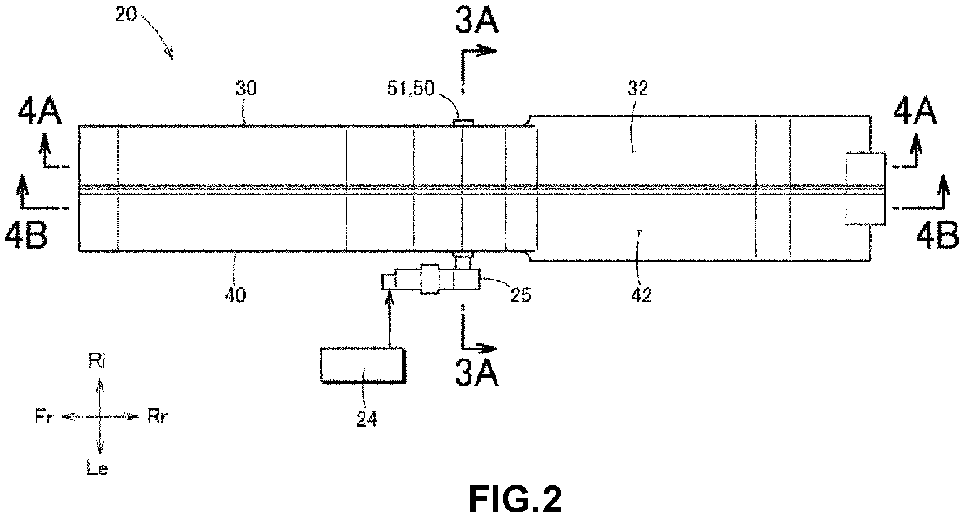

Refer to FIG. 2. The duct apparatus 20 is longer in the fore-and-aft direction. In this embodiment, a longitudinal direction of the duct apparatus 20 is along the fore-and-aft direction of the vehicle Ve (see FIG. 1), and the fore-and-aft direction and the longitudinal direction refer to the same direction.

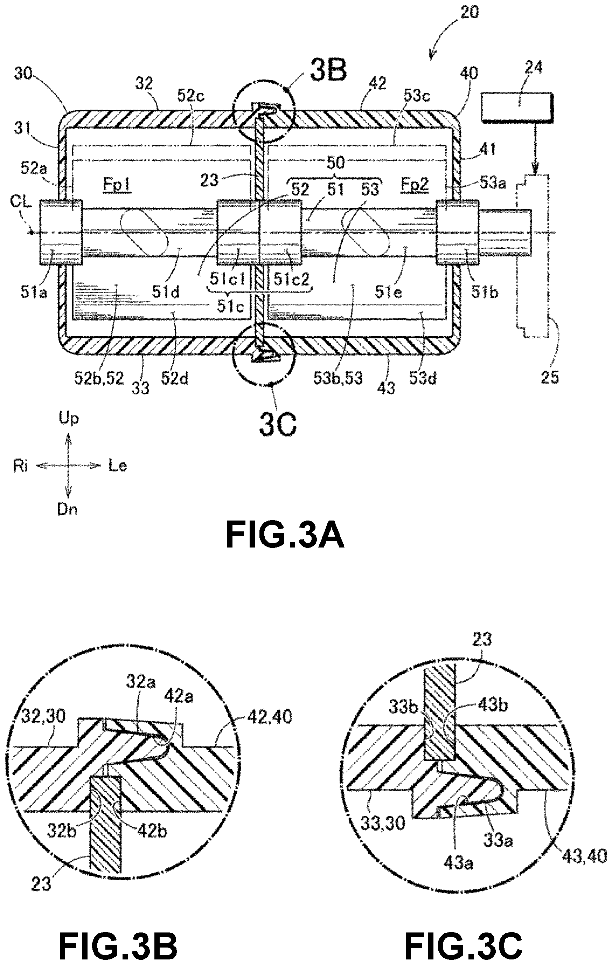

Refer to FIG. 3A. The duct apparatus 20 includes a first duct 30, a second duct 40, a partition wall 23, an actuator 25, and an airflow rate regulating door 50. The first duct 30 is a substantially U-shaped member opened toward the center in the lateral direction, and the air flows in the first duct 30. The second duct 40 is a substantially U-shaped member opened toward the first duct 30 and has a longitudinal direction along the first duct 30. The partition wall 23 is interposed between the first duct 30 and the second duct 40 to divide, into two, a space enclosed by the first duct 30 and the second duct 40. The actuator 25 is disposed on a side of the second duct 40 and operates based on an electrical signal transmitted from a controller 24. The airflow rate regulating door 50 is coupled to the actuator 25 to regulate rates of the air flowing in the first duct 30 and the second duct 40.

A space defined by the first duct 30 and the partition wall 23 will be referred to as first airflow passage Fp1, and a space defined by the second duct 40 and the partition wall 23 will be referred to as second airflow passage Fp2.

The duct apparatus 20 is disposed in the center of the vehicle width. The air that has passed through the first airflow passage Fp1 is sent toward the right side of the back seats Bs (see FIG. 1), and the air that has passed through the second airflow passage Fp2 is sent toward the left side of the back seats Bs.

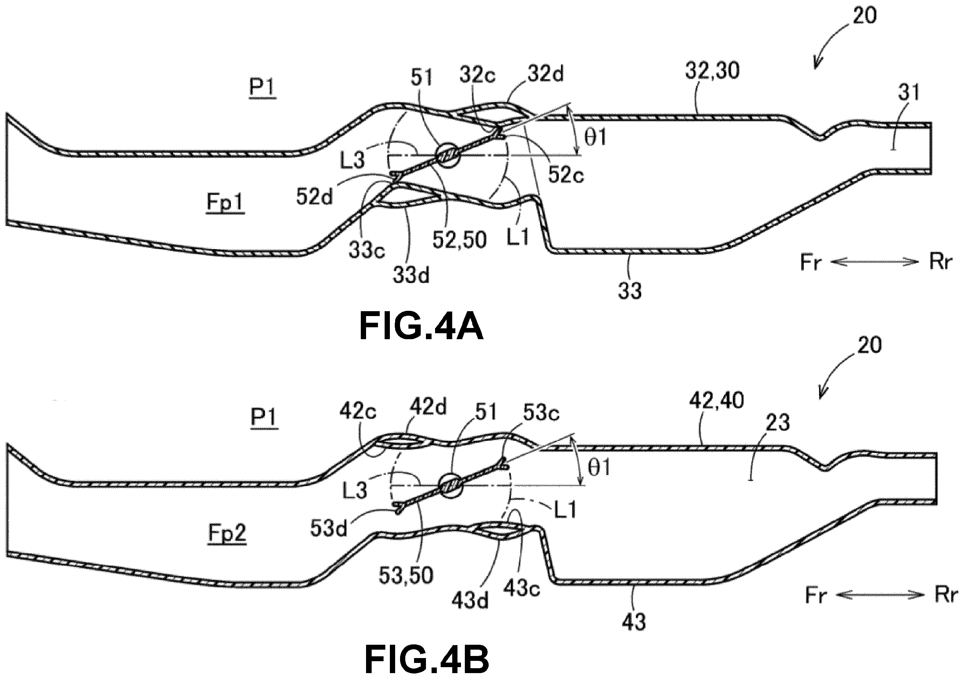

Refer also to FIG. 4A. The first duct 30 includes a first side wall 31, a first upper wall 32, and a first lower wall 33. The first side wall 31 corresponds to the bottom of the U-shaped cross-section and extends in the fore-and-aft direction. The first upper wall 32 extends from an upper end of the first side wall 31 toward the second duct 40. The first lower wall 33 extends from a lower end of the first side wall 31 toward the second duct 40.

Refer to FIGs. 3A and 4B. The second duct 40 includes a second side wall 41, a second upper wall 42, and a second lower wall 43. The second side wall 41 corresponds to the bottom of the U-shaped cross-section and extends in the fore-and-aft direction. The second upper wall 42 extends from an upper end of the second side wall 41 toward the first upper wall 32. The second lower wall 43 extends from a lower end of the second side wall 41 toward the first lower wall 33.

Refer to FIGs. 3A to 3C. A distal end of the first upper wall 32 includes an upper fitting protrusion 32a and a first upper holder 32b. The upper fitting protrusion 32a protrudes toward the second duct 40 and is fitted in the second duct 40. Below the upper fitting protrusion 32a, the first upper holder 32b and the second duct 40 hold the partition wall 23 therebetween.

The upper fitting protrusion 32a is continuously formed in the fore-and-aft direction. The first upper holder 32b may be continuously formed in the fore-and-aft direction or discontinuously formed at a plurality of positions. The first holder 32b is recessed to conform with a shape of an end portion of the partition wall 23.

A distal end of the first lower wall 33 includes a lower fitting protrusion 33a and a first lower holder 33b. The lower fitting protrusion 33a protrudes toward the second duct 40 and is fitted in the second duct 40. Above the lower fitting protrusion 33a, the first lower holder 33b and the second duct 40 hold the partition wall 23 therebetween.

The lower fitting protrusion 33a is continuously formed in the fore-and-aft direction. The first lower holder 33b may be continuously formed in the fore-and-aft direction or discontinuously formed at a plurality of positions. The first lower holder 33b is recessed to conform with a shape of an end portion of the partition wall 23.

A distal end of the second upper wall 42 includes an upper fitting groove 42a and a second upper holder 42b. The upper fitting groove 42a has a groove shape in which the upper fitting protrusion 32a is fitted. Below the upper fitting groove 42a, the second upper holder 42b and the first upper holder 32b hold the partition wall 23 therebetween.

The upper fitting groove 42a is continuously formed in the fore-and-aft direction. The second upper holder 42b may be continuously formed in the fore-and-aft direction or discontinuously formed at a plurality of positions. The second upper holder 42b is recessed to conform with a shape of an end portion of the partition wall 23.

A distal end of the second lower wall 43 includes a lower fitting groove 43a and a second lower holder 43b. The lower fitting groove 43a has a groove shape in which the lower fitting protrusion 33a is fitted. Above the lower fitting groove 43a, the second lower holder 43b and the first lower holder 33b hold the partition wall 23 therebetween.

The lower fitting groove 43a is continuously formed in the fore-and-aft direction. The second lower holder 43b may be continuously formed in the fore-and-aft direction or discontinuously formed at a plurality of positions. The second lower holder 43b is recessed to conform with a shape of an end portion of the partition wall 23.

Refer to FIG. 4A. The first upper wall 32 includes a first upper convex portion 32c (the first concave/convex portion 32c) projecting toward a turning range L1 of the airflow rate regulating door 50. The first upper convex portion 32c has an upper surface covered with a first upper cover 32d. The first upper cover 32d is formed along a shape of the partition wall 23 (see FIG. 4B).

The first lower wall 33 includes a first lower convex portion 33c (the first concave/convex portion 33c) projecting toward the turning range L1 of the airflow rate regulating door 50. The first lower convex portion 33c has a lower surface covered with a first lower cover 33d. The first lower cover 33d is formed along the shape of the partition wall 23.

Refer to FIG. 4B. The second upper wall 42 includes a second upper convex portion 42c (the second concave/convex portion 42c) projecting toward the turning range L1 of the airflow rate regulating door 50. The second upper convex portion 42c has an upper surface covered with a second upper cover 42d. The second upper cover 42d is formed along the shape of the partition wall 23.

The second lower wall 43 includes a second lower convex portion 43c (the second concave/convex portion 43c) projecting toward the turning range L1 of the airflow rate regulating door 50. The second lower convex portion 43c has a lower surface covered with a second lower cover 43d. The second lower cover 43d is formed along the shape of the partition wall 23.

Refer also to FIG. 4A. As viewed in an air flowing direction (the lateral direction in the drawing), the first upper convex portion 32c is at a position offset from a position of the second upper convex portion 42c. The first lower convex portion 33c is at a position offset from a position of the second lower convex portion 43c. Meanwhile, the first upper convex portion 32c is at a position at least partly overlapping a position of the second lower convex portion 43c. The first lower convex portion 33c is at a position at least partly overlapping a position of the second upper convex portion 42c.

Note that the upper fitting protrusion 32a and the lower fitting protrusion 33a may be formed on the second duct 40 whereas the upper fitting groove 42a and the lower fitting groove 43a may be formed in the first duct 30. Moreover, the upper fitting protrusion 32a and the lower fitting protrusion 33a may not necessarily be formed on the same duct. For example, the upper fitting protrusion 32a and the lower fitting groove 43a may be formed on the first duct 30 whereas the upper fitting groove 42a and the lower fitting protrusion 33a may be formed on the second duct 40. Conversely, the upper fitting protrusion 32a and the lower fitting groove 43a may be formed on the second duct 40 whereas the upper fitting groove 42a and the lower fitting protrusion 33a may be formed on the first duct 30.

Alternatively, the first upper convex portion 32c, the first lower convex portion 33c, the second upper convex portion 42c, and the second lower convex portion 43c may be concave portions to be away from the turning range L1 of the airflow rate regulating door 50. That is, these portions 32c, 33c, 42c, and 43c may be formed radially outside or inside of the turning range L1, as illustrated in FIGs. 4A and 4B. The reason is that passage areas can be adjusted with concave/convex shapes relative to the turning range L1 of the airflow rate regulating door 50.

The partition wall 23 has such a shape as to enclose a space from the first upper wall 32 to the first lower wall 33 and enclose a space from the second upper wall 42 to the second lower wall 43. An upper surface of the partition wall 23 has a portion that is not enclosed by the first upper wall 32 or the second upper wall 42, and this portion is covered with the first upper cover 32d or the second upper cover 42d. A lower surface of the partition wall 23 has a portion that is not enclosed by the first lower wall 33 or the second lower wall 43, and this portion is covered with the first lower cover 33d or the second lower cover 43d. The partition wall 23 can be regarded as being covered with the first duct 30 and the second duct 40 except for end portions of the partition wall 23 at an upstream side and a downstream side in the air flowing direction.

Refer to FIGs. 3B and 3C. An upper end surface of the partition wall 23 is below a position where an end surface of the first duct 30 and an end surface of the second duct 40 are fitted to each other whereas a lower end surface of the partition wall 23 is above a position where the end surface of the first duct 30 and the end surface of the second duct 40 are fitted to each other.

Refer to FIG. 3A. Examples of the actuator 25 include a stepping motor. Based on a vehicle occupant's operation and a set temperature, for example, the controller 24 transmits an electrical signal to the actuator 25 to operate the actuator 25.

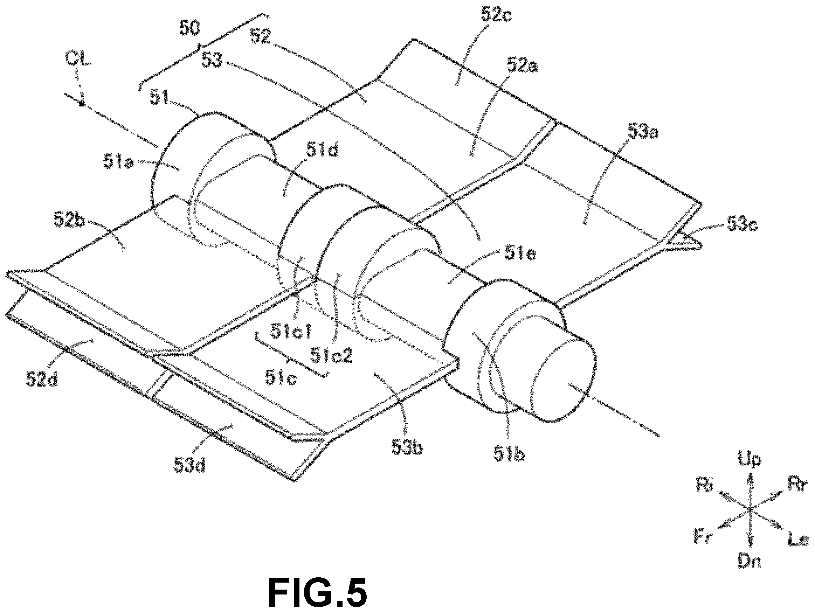

Refer also to FIG. 5. The airflow rate regulating door 50 includes a turning shaft 51, a first plate 52, and a second plate 53 that are integrally formed. The turning shaft 51 is rotatably supported by the first duct 30, the second duct 40, and the partition wall 23. The first plate 52 radially extends from the turning shaft 51 and adjusts a passage area of the first airflow passage Fp1. The second plate 53 radially extends from the turning shaft 51 and adjusts a passage area of the second airflow passage Fp2.

Note that other than a configuration of the turning shaft 51, the first plate 52, and the second plate 53 being integrally formed, the airflow rate regulating door 50 may be integrated as an assembly of different components individually formed. Moreover, other than a configuration of being formed of an identical member, the turning shaft 51 may include different shafts individually formed of different members but coupled together.

The turning shaft 51 extends through the partition wall 23 and is perpendicular to the air flowing direction. That is, the turning shaft 51 is perpendicular to the longitudinal direction. The turning shaft 51 includes a portion 51a in contact with the first duct 30, a portion 51b in contact with the second duct 40, and a portion 51c in contact with the partition wall 23. The portions 51a, 51b, and 51c have solid cylindrical shapes. The turning shaft 51 also includes a portion 51d that forms proximal ends of the first plate 52 and a portion 51e that forms proximal ends of the second plate 53. The portions 51d and 51e have elliptical shapes in cross-section perpendicular to an axis CL. The first plate 52 and the second plate 53 each extend from positions corresponding to apices of the elliptical shapes.

In the illustrated example, the portion 51c in contact with the partition wall 23 includes a first proximal portion 51c1 integral to the portion 51d that forms the proximal ends of the first plate 52, and a second proximal portion 51c2 integral to the portion 51e that forms the proximal ends of the second plate 53. After formed as individual members, the first proximal portion 51c1 and the second proximal portion 51c2 are coupled to each other as an integral member.

The first plate 52 includes first plate main bodies 52a and 52b extending in reverse directions from the turning shaft 51, and first valves 52c and 52d respectively formed on distal ends of these first plate main bodies 52a and 52b and contactable with an inner wall of the first duct 30.

The first valves 52c and 52d have a substantially V-shaped cross-section. The first valve 52c on one side is contactable with the first upper convex portion 32c (see FIG. 4A), and the first valve 52d on the other side is contactable with the first lower convex portion 33c (see FIG. 4A). These first valves 52c and 52d may be made of a different material from the first plate main bodies 52a and 52b by two-color molding, for example.

The second plate 53 extends from the turning shaft 51 in the same directions as the first plate 52 along the first plate 52. Moreover, the second plate 53 has the same size and shape as the first plate 52. The second plate 53 includes second plate main bodies 53a and 53b extending in reverse directions from the turning shaft 51, and second valves 53c and 53d respectively formed on distal ends of these second plate main bodies 53a and 53b and contactable with an inner wall of the second duct 40.

The second valves 53c and 53d have a substantially V-shaped cross-section. The second valve 53c on one side is contactable with the second upper convex portion 42c (see FIG. 4B), and the second valve 53d on the other side is contactable with the second lower convex portion 43c (see FIG. 4B). These second valves 53c and 53d may be made of a different material from the second plate main bodies 53a and 53b by two-color molding, for example.

Functions of the duct apparatus 20 will be described below.

Refer to FIG. 3A. Immediately after turning on the ignition switch of the vehicle Ve (see FIG. 1), for example, the cabin Vi (see FIG. 1) may have a high temperature. In order to cool the interior of the cabin Vi in a short time, it is necessary to maximize the passage areas. The controller 24 moves the airflow rate regulating door 50 to a fully open position. The controller 24 operates the actuator 25 to turn the airflow rate regulating door 50.

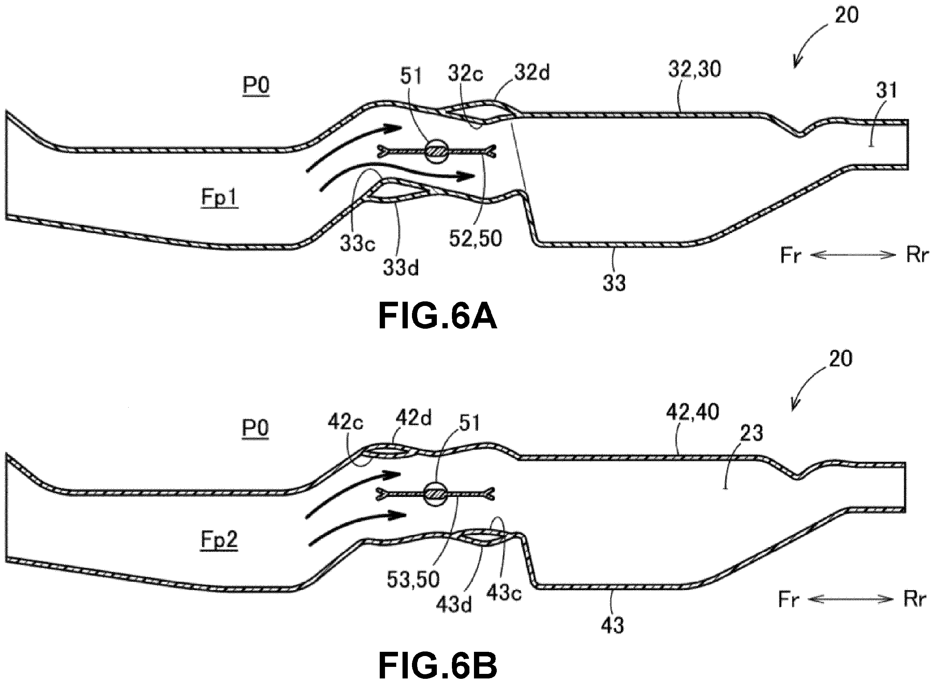

Refer to FIGs. 6A and 6B. The first plate 52 and the second plate 53 are oriented in the same direction relative to the turning shaft 51. When the turning shaft 51 is rotated, the first plate 52 and the second plate 53 are accordingly turned in the same direction. In a state illustrated in the drawings, the airflow rate regulating door 50 is in a fully open position P0 with the first plate 52 and the second plate 53 being both oriented in the air flowing direction. When the airflow rate regulating door 50 is in the fully open position P0, the passage areas of the first airflow passage Fp1 and the second airflow passage Fp2 are both at the maximum. An airflow rate is the product of a passage area and an airflow speed. With the passage areas being at the maximum, the airflow rates can be maximized to cool the cabin Vi in a short time.

After a predetermined period of time has elapsed and after the cabin has been cooled, it is no longer necessary to blow a maximum amount of the air to both the first duct 30 and the second duct 40. However, for example, when a vehicle occupant is only on the left side of the back seats Bs (see FIG. 1), it is desirable to blow more air to the second duct 40. The controller 24 (see FIG. 3A) operates the actuator 25 (see FIG. 3A) to turn the airflow rate regulating door 50.

Refer to FIGs. 4A and 4B. In a state illustrated in FIG. 4A, the first valves 52c and 52d are respectively in contact with the first upper convex portion 32c and the first lower convex portion 33c. That is, end portions of the first plate 52 are in contact with an inner wall surface of the first duct 30. The first upper convex portion 32c and the first lower convex portion 33c restrict turning of the airflow rate regulating door 50 counterclockwise (in a first direction). Meanwhile, end portions of the second plate 53 are both apart from an inner wall surface of the second duct 40. This state will be referred to as the airflow rate regulating door 50 being in a first position P1.

When the airflow rate regulating door 50 is in the first position P1, the plates 52 and 53 are each inclined by an angle θ1 in the first direction from a fully open position (see phantom line L3). When the airflow rate regulating door 50 is in the first position P1, the air flows only through the second airflow passage Fp2. The air does not flow through the first airflow passage Fp1.

Note that when the airflow rate regulating door 50 is in the first position P1, both of the end portions of the first plate 52 may not necessarily be in contact with the inner wall surface of the first duct 30. At this time, although the air flows through both of the second air passage Fp2 and the first air passage Fp1, the air flowing through the first air passage Fp1 is less than the air flowing through the second air passage Fp2.

That is, when the airflow rate regulating door 50 is in the first position P1, the passage area of the first airflow passage Fp1 defined by the first plate 52 and the inner wall surface of the first duct 30 is at the minimum. When the passage area is at the minimum (including 0), the passage area of the second airflow passage Fp2 defined by the second plate 53 and the inner wall surface of the second duct 40 is larger than the passage area of the first airflow passage Fp1.

When a vehicle occupant is only on the right side of the back seats Bs (see FIG. 1), for example, it is desirable to blow more air to the first duct 30. The controller 24 (see FIG. 3A) operates the actuator 25 (see FIG. 3A) to turn the airflow rate regulating door 50.

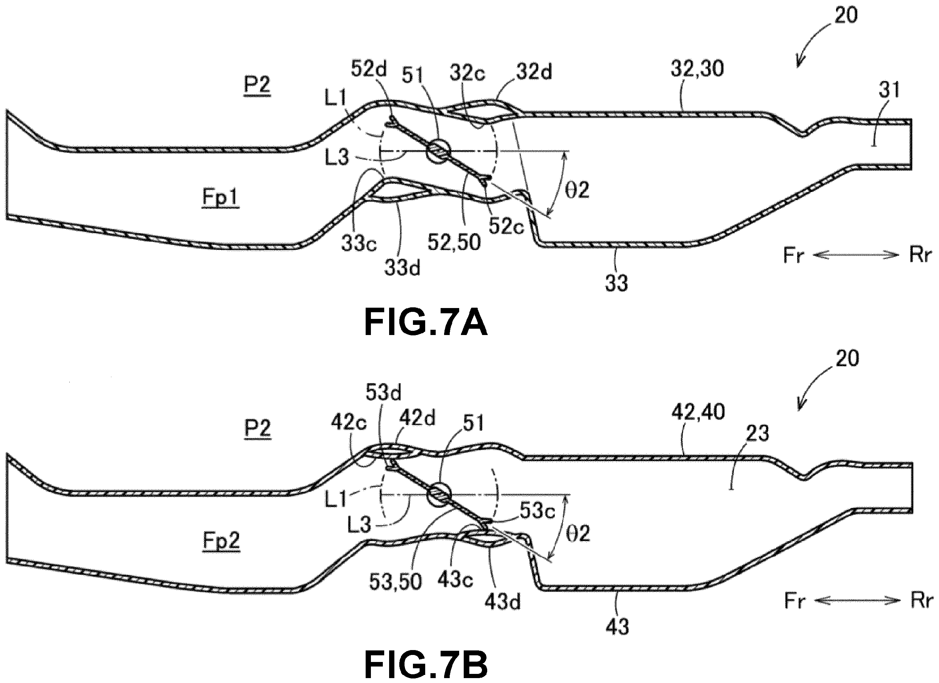

Refer to FIGs. 7A and 7B. In a state illustrated in FIG. 7B, the second valves 53c and 53d are respectively in contact with the second upper convex portion 42c and the second lower convex portion 43c. That is, end portions of the second plate 53 are in contact with the inner wall surface of the second duct 40. The second upper convex portion 42c and the second lower convex portion 43c restrict turning of the airflow rate regulating door 50 clockwise (in a second direction). Meanwhile, both of the end portions of the first plate 52 are apart from the inner wall surface of the first duct 30. This state will be referred to as the airflow rate regulating door 50 being in a second position P2.

When the airflow rate regulating door 50 is in the second position P2, the plates 52 and 53 are each inclined by an angle θ2 in the second direction from the fully open position (see phantom line L3). When the airflow rate regulating door 50 is in the second position P2, the air flows only through the first airflow passage Fp1. The air does not flow through the second airflow passage Fp2.

Note that when the airflow rate regulating door 50 is in the second position P2, both of the end portions of the second plate 53 may not necessarily be in contact with the inner wall surface of the second duct 40. At this time, although the air flows through both of the first air passage Fp1 and the second air passage Fp2, the air flowing through the second air passage Fp2 is less than the air flowing through the first air passage Fp1.

That is, when the airflow rate regulating door 50 is in the second position P2, the passage area of the second airflow passage Fp2 defined by the second plate 53 and the inner wall surface of the second duct 40 is at the minimum. When the passage area is at the minimum (including 0), the passage area of the first airflow passage Fp1 defined by the first plate 52 and the inner wall surface of the first duct 30 is larger than the passage area of the second airflow passage Fp2.

The airflow rate regulating door 50 described above is turnable from the first position P1 (see FIG. 4A) to the second position P2 and passes through the fully open position P0 (see FIG. 6A) partway. The airflow rate regulating door 50 can be stopped in any position between the first position P1 and the second position P2 to adjust the passage areas of the first airflow passage Fp1 and the second airflow passage Fp2 so as to change the airflow rates of the air flowing through the two airflow passages Fp1 and Fp2.

The duct apparatus 20 described above produces the following effects.

Refer to FIGs. 6A and 6B. The first plate 52 and the second plate 53 are oriented in the same direction relative to the turning shaft 51. Therefore, the first plate 52 and the second plate 53 can be oriented along the air flowing direction to fully open the first airflow passage Fp1 and the second airflow passage Fp2 simultaneously. In the fully open states, the first plate 52 and the second plate 53 are oriented along the air flowing direction to prevent the air from meandering in the airflow passages Fp1 and Fp2. This makes it possible to blow the air efficiently.

Refer to FIGs. 4A and 4B. When the airflow rate regulating door 50 is in the first position P1, at least one of the end portions of the first plate 52 is in contact with the inner wall surface of the first duct 30, and both of the end portions of the second plate 53 are apart from the inner wall surface of the second duct 40. In other words, when the airflow rate regulating door 50 is in the first position P1, the passage area of the first airflow passage Fp1 defined by the first plate 52 and the inner wall surface of the first duct 30 is at the minimum, and the passage area of the second airflow passage Fp2 defined by the second plate 53 and the inner wall surface of the second duct 40 is larger than the passage area of the first airflow passage Fp1.

Refer to FIGs. 7A and 7B. When the airflow rate regulating door 50 is in the second position P2, the passage area of the second airflow passage Fp2 defined by the second plate 53 and the inner wall surface of the second duct 40 is at the minimum, and the passage area of the first airflow passage Fp1 defined by the first plate 52 and the inner wall surface of the first duct 30 is larger than the passage area of the second airflow passage Fp2. That is, the airflow rates of the two airflow passages Fp1 and Fp2 can be regulated and made different from each other.

The invention provides the duct apparatus 20 in which the airflow rates of the two airflow passages Fp1 and Fp2 can be regulated and made different from each other, but the two airflow passages Fp1 and Fp2 can be made fully open in a specified case.

The first position P1 (see FIG. 4A) is defined by the first concave/convex portions 32c and 33c formed unevenly on the first duct 30, and the second position P2 is defined by the second concave/convex portions 42c and 43c formed unevenly on the second duct 40. The concave/convex portions 32c, 33c, 42c, and 43c formed on the respective ducts 30 and 40 constitute the first position P1 and the second position P2. The airflow rates can be regulated without increasing the number of components.

### Second Embodiment

Next, a duct apparatus 20A according to a second embodiment will be described with reference to the drawings.

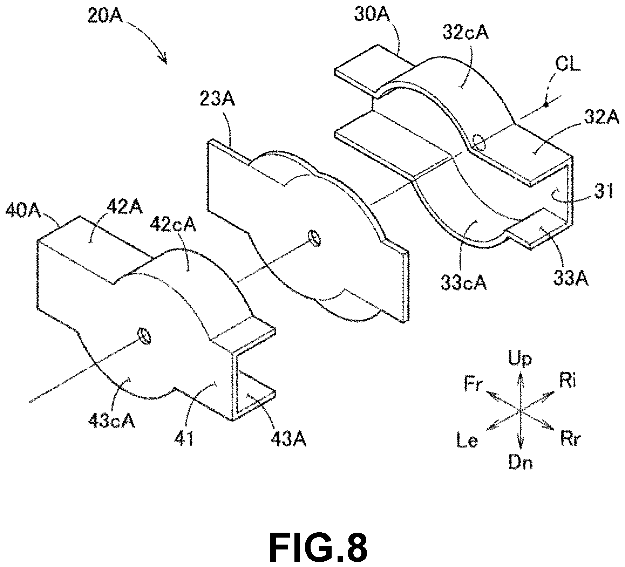

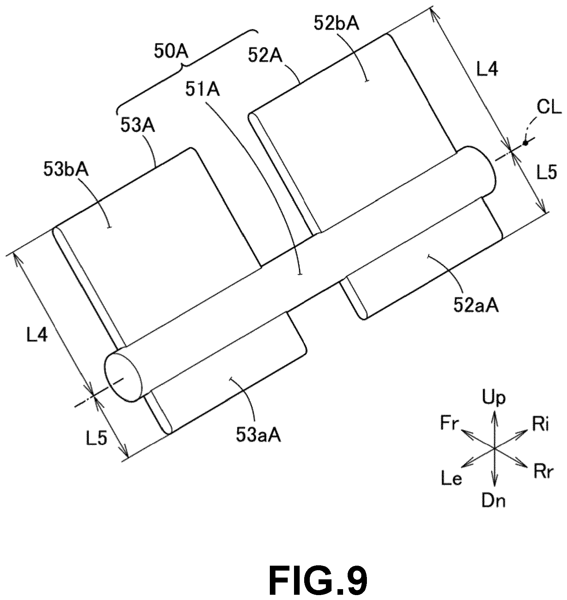

Refer to FIGs. 8 and 9. FIG. 8 illustrates a first duct 30A, a second duct 40A, and a partition wall 23A used for the duct apparatus 20A according to the second embodiment. FIG. 9 illustrates an airflow rate regulating door 50A used for the duct apparatus 20A according to the second embodiment. Substantially the same components as in the first embodiment are denoted with identical reference numerals and signs and will not be elaborated here.

A first upper wall 32A includes a first upper concave portion 32cA (the first concave/convex portion 32cA) recessed away from the airflow rate regulating door 50A. A first lower wall 33A includes a first lower concave portion 33cA (the first concave/convex portion 33cA) recessed away from the airflow rate regulating door 50A.

A second upper wall 42A includes a second upper concave portion 42cA (the second concave/convex portion 42cA) recessed away from the airflow rate regulating door 50A. A second lower wall 43A includes a second lower concave portion 43cA (the second concave/convex portion 43cA) recessed away from the airflow rate regulating door 50A.

Note that the first duct 30A does not include the first upper cover 32d (see FIG. 4A). Consequently, a rear surface of a portion of the partition wall 23A that covers the first upper concave portion 32cA is exposed outside. Similarly, rear surfaces of portions of the partition wall 23A that cover the first lower concave portion 33cA, the second upper concave portion 42cA, and the second lower concave portion 43cA are exposed outside.

A first plate 52A includes a first plate main body 52bA on one side (first side) and a first plate main body 52aA on the other side (second side) . The first plate main body 52bA has a length L4 from a turning shaft 51A. The first plate main body 52aA has a length L5 from the turning shaft 51A. L4 > L5. That is, the plate main bodies 52aA and 52bA have different lengths from the turning shaft 51A.

A second plate 53A includes a second plate main body 53bA on the first side and a second plate main body 53aA on the second side. The second plate main body 53bA has the length L4 from the turning shaft 51A. The second plate main body 53aA has the length L5 from the turning shaft 51A. L4 > L5. That is, the plate main bodies 53aA and 53bA have different lengths from the turning shaft 51A.

The first plate main body 52bA on the first side has the same length from the turning shaft 51A as the second plate main body 53bA on the first side. The first plate main body 52aA on the second side has the same length from the turning shaft 51A as the second plate main body 53aA on the second side.

The rest of basic configuration is the same as of the duct apparatus 20 according to the first embodiment.

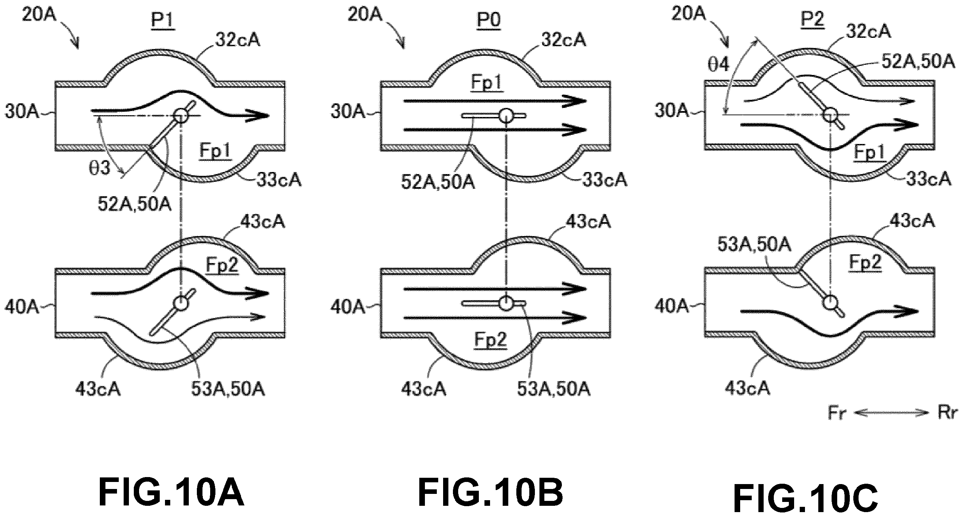

Refer to FIG. 10A. When the airflow rate regulating door 50A is in the first position P1, the plates 52A and 53A are each inclined by an angle θ3 from a fully open position. At this time, one end of the first plate 52A is in contact with an inner wall surface of the first duct 30A. Meanwhile, the other end of the first plate 52A is not in contact with the inner wall surface of the first duct 30A. Consequently, even when the airflow rate regulating door 50A is in the first position P1, the passage area of the first airflow passage Fp1 is not 0. As a result, even when the airflow rate regulating door 50A is in the first position P1, a predetermined amount of airflow passes.

Meanwhile, the second plate 53A has both ends apart from an inner wall surface of the second duct 40A. Consequently, when the airflow rate regulating door 50A is in the first position P1, the passage area of the second airflow passage Fp2 is larger than the passage area of the first airflow passage Fp1. This makes the second airflow passage Fp2 have a higher airflow rate.

Refer to FIG. 10B. In an illustrated state, the airflow rate regulating door 50A is in the fully open position P0 where both of the first plate 52A and the second plate 53A are oriented in the air flowing direction. When the airflow rate regulating door 50A is in the fully open position P0, the passage areas of the first airflow passage Fp1 and the second airflow passage Fp2 are both maximized. An airflow rate is the product of a passage area and an airflow speed. By maximizing the passage areas, the airflow rates can be maximized to cool the interior of the cabin Vi (see FIG. 1) in a short time.

Refer to FIG. 10C. When the airflow rate regulating door 50A is in the second position P2, the plates 52A and 53A are each inclined by an angle θ4 from a fully open position. At this time, one end of the second plate 53A is in contact with the inner wall surface of the second duct 40A. Meanwhile, the other end of the second plate 53A is not in contact with the inner wall surface of the second duct 40A. Consequently, even when the airflow rate regulating door 50A is in the second position P2, the passage area of the second airflow passage Fp2 is not 0. As a result, even when the airflow rate regulating door 50A is in the second position P2, a predetermined amount of airflow passes.

Meanwhile, the first plate 52A has both ends apart from the inner wall surface of the first duct 30A. Consequently, when the airflow rate regulating door 50A is in the second position P2, the passage area of the first airflow passage Fp1 is larger than the passage area of the second airflow passage Fp2. This makes the first airflow passage Fp1 have a higher airflow rate.

The duct apparatus 20A described above also produces the effects pertaining to the invention.

Note that the embodiments may be combined with each other as appropriate.

Moreover, the duct apparatus according to the invention is applicable to three airflow passages or more disposed in parallel. The invention is also applicable to a duct apparatus to blow air to front seats (in a first row). That is, the invention is not limited to the duct apparatus to blow air to the back seats. In a vehicle including seats in three rows or more, an end portion of the first airflow passage may be opened toward a second-row seat, and an end portion of the second airflow passage may be opened toward a third-row seat. That is, the duct apparatus may be used not only to make rates of airflows to the left and right seats differ from each other but also to make rates of airflows to the front and rear seats differ from each other.

Insofar as the functions and effects of the invention can be implemented, the invention is not limited to the embodiments.

The duct apparatus according to the invention is suitable for a vehicular air conditioner.

### Description of Reference Numerals and Signs

20, 20A: vehicular duct apparatus
30, 30A: first duct
32c: first upper convex portion (first concave/convex portion)
32cA: first upper concave portion (first concave/convex portion)
33c: first lower convex portion (first concave/convex portion)
33cA: first lower concave portion (first concave/convex portion)
40, 40A: second duct
42c: second upper convex portion (second concave/convex portion)
42cA: second upper concave portion (second concave/convex portion)
43c: second lower convex portion (second concave/convex portion)
43cA: second lower concave portion (second concave/convex portion)
50, 50A: airflow rate regulating door
51, 51A: turning shaft
52, 52A: first plate
53, 53A: second plate
Fp1: first airflow passage
Fp2: second airflow passage

## Claims

1. A vehicular duct apparatus (20, 20A) comprising: a first duct (30, 30A) extending in a longitudinal direction and comprising a first airflow passage (Fp1); a second duct (40, 40A) at least partly extending in the longitudinal direction along the first duct (30, 30A) and comprising a second airflow passage (Fp2); and an airflow rate regulating door (50, 50A) configured to turn to adjust passage areas of the first airflow passage (Fp1) and the second airflow passage (Fp2) to regulate airflow rates, the airflow rate regulating door (50, 50A) comprising: a turning shaft (51, 51A) extending in a direction perpendicular to the longitudinal direction of the first airflow passage (Fp1) and the second airflow passage (Fp2) and supported by the first duct (30, 30A) and the second duct (40, 40A) so as to be turnable; a first plate (52, 52A) extending from the turning shaft (51, 51A) and configured to adjust the passage area of the first airflow passage (Fp1); and a second plate (53, 53A) extending from the turning shaft (51, 51A) and configured to adjust the passage area of the second airflow passage (Fp2), the airflow rate regulating door (50, 50A) being turnable between a first position (P1) to cause the first plate (52 52A) to minimize the passage area of the first airflow passage (Fp1) and a second position (P2) to cause the second plate (53, 53A) to minimize the passage area of the second airflow passage (Fp2), wherein when the airflow rate regulating door (50, 50A) is in the first position (P1), the first plate (52, 52A) has at least one end in contact with an inner wall surface of the first duct (30, 30A), and the second plate (53, 53A) has both ends apart from an inner wall surface of the second duct (40, 40A), and when the airflow rate regulating door (50, 50A) is in the second position (P2), the first plate (52, 52A) has both ends apart from the inner wall surface of the first duct (30, 30A), and the second plate (53, 53A) has at least one end in contact with the inner wall surface of the second duct (40, 40A), **characterized in that** the second plate (53, 53A) extends from the turning shaft (51, 51A) at a same extending angle as the first plate (52, 52A) so that the first plate (52, 52A) and the second plate (53, 53A) are oriented in the same direction relative to the turning shaft (51, 51A).

2. The vehicular duct apparatus according to claim 1, wherein the first position (P1) is defined by first concave/convex portions (32c, 33c, 32cA, 33cA) unevenly formed on the first duct (30, 30A), and the second position (P2) is defined by second concave/convex portions (42c, 43c, 42cA, 43cA) unevenly formed on the second duct (40, 40A).

## Patentansprüche

1. Fahrzeugkanalvorrichtung (20, 20A), umfassend: einen ersten Kanal (30, 30A), der sich in eine Längsrichtung erstreckt und einen ersten Luftströmungsdurchgang (Fp1) umfasst, einen zweiten Kanal (40, 40A), der sich mindestens teilweise in die Längsrichtung entlang dem ersten Kanal (30, 30A) erstreckt und einen zweiten Luftströmungsdurchgang (Fp2) umfasst, und eine Luftströmungsratenregulierungstür (50, 50A), die zum Drehen ausgestaltet ist, um Durchgangsbereiche des ersten Luftströmungsdurchgangs (Fp1) und des zweiten Luftströmungsdurchgangs (Fp2) zur Regulierung von Luftströmungsraten zu verstellen, wobei die Luftströmungsratenregulierungstür (50, 50A) Folgendes umfasst: eine Drehachse (51, 51A), die sich in eine senkrecht zu der Längsrichtung des ersten Luftströmungsdurchgangs (Fp1) und des zweiten Luftströmungsdurchgangs (Fp2) verlaufende Richtung erstreckt und von dem ersten Kanal (30, 30A) und dem zweiten Kanal (40, 40A) gestützt wird, so dass sie drehbar ist, eine erste Platte (52, 52A), die sich von der Drehachse (51, 51A) erstreckt und zum Verstellen des Durchgangsbereichs des ersten Luftströmungsdurchgang (Fp1) ausgestaltet ist, und eine zweite Platte (53, 53A), die sich von der Drehachse (51, 51A) erstreckt und zum Verstellen des Durchgangsbereichs des zweiten Luftströmungsdurchgang (Fp2) ausgestaltet ist, wobei die Luftströmungsratenregulierungstür (50, 50A) zwischen einer ersten Position (P1), um zu veranlassen, dass die erste Platte (52, 52A) den Durchgangsbereich des ersten Luftströmungsdurchgangs (Fp1) minimiert, und einer zweiten Position (P2), um zu veranlassen, dass die zweite Platte (53, 53A) den Durchgangsbereich des zweiten Luftströmungsdurchgangs (Fp2) minimiert, drehbar ist, wobei, wenn die Luftströmungsratenregulierungstür (50, 50A) in der ersten Position (P1) ist, die erste Platte (52, 52A) mindestens ein Ende in Kontakt mit einer Innenwandfläche des ersten Kanals (30, 30A) hat und die zweite Platte (53, 53A) beide Enden von einer Innenwandfläche des zweiten Kanals (40, 40A) beabstandet hat, und wenn die Luftströmungsratenregulierungstür (50, 50A) in der zweiten Position (P2) ist, die erste Platte (52, 52A) beide Enden von der Innenwandfläche des ersten Kanals (30, 30A) beabstandet hat und die zweite Platte (53, 53A) mindestens ein Ende in Kontakt mit der Innenwandfläche des zweiten Kanals (40, 40A) hat, **dadurch gekennzeichnet, dass** sich die zweite Platte (53, 53A) von der Drehachse (51, 51A) in demselben Erstreckungswinkel wie die erste Platte (52, 52A) erstreckt, so dass die erste Platte (52, 52A) und die zweite Platte (53, 53A) bezüglich der Drehachse (51, 51A) in derselben Richtung ausgerichtet sind.

2. Fahrzeugkanalvorrichtung nach Anspruch 1, wobei die erste Position (P1) durch erste konkave/konvexe Abschnitte (32c, 33c, 32cA, 33cA) definiert ist, die ungleichmäßig an dem ersten Kanal (30, 30A) ausgebildet sind, und die zweite Position (P2) durch zweite konkave/konvexe Abschnitte (42c, 43c, 42cA, 43cA) definiert ist, die ungleichmäßig an dem zweiten Kanal (40, 40A) ausgebildet sind.

## Revendications

1. Dispositif de canal pour un véhicule (20, 20A) comprenant : un premier canal (30, 30A) s'étendant dans une direction longitudinale et comprenant un premier passage d'écoulement d'air (Fp1) ; un second canal (40, 40A) s'étendant au moins partiellement dans la direction longitudinale le long du premier canal (30, 30A) et comprenant un second passage d'écoulement d'air (Fp2) ; et un volet de régulation de débit d'air (50, 50A) conçu pour pivoter afin d'ajuster des sections de passage du premier passage d'écoulement d'air (Fp1) et du second passage d'écoulement d'air (Fp2) afin de réguler des débits d'air, le volet de régulation de débit d'air (50, 50A) comprenant : un axe pivotant (51, 51A) s'étendant dans une direction perpendiculaire à la direction longitudinale du premier passage d'écoulement d'air (Fp1) et du second passage d'écoulement d'air (Fp2) et supporté par le premier canal (30, 30A) et le second canal (40, 40A) de façon à être apte à pivoter ; une première plaque (52, 52A) s'étendant à partir de l'axe pivotant (51, 51A) et conçue pour ajuster la section de passage du premier passage d'écoulement d'air (Fp1) ; et une seconde plaque (53, 53A) s'étendant à partir de l'axe pivotant (51, 51A) et conçue pour ajuster la section de passage du second passage d'écoulement d'air (Fp2), le volet de régulation de débit d'air (50, 50A) étant apte à pivoter entre une première position (P1) pour amener la première plaque (52, 52A) à réduire la section de passage du premier passage d'écoulement d'air (Fp1) et une seconde position (P2) pour amener la seconde plaque (53, 53A) à réduire la section de passage du second passage d'écoulement d'air (Fp2), la première plaque (52, 52A) ayant au moins une extrémité en contact avec une surface de paroi intérieure du premier canal (30, 30A) et la seconde plaque (53, 53A) ayant ses deux extrémités séparées d'une surface de paroi intérieure du second canal (40, 40A) lorsque le volet de régulation de débit d'air (50, 50A) se trouve dans la première position (P1), et la première plaque (52, 52A) ayant ses deux extrémités séparées de la surface de paroi intérieure du premier canal (30, 30A) et la seconde plaque (53, 53A) ayant au moins une extrémité en contact avec la surface de paroi intérieure du second canal (40, 40A) lorsque le volet de régulation de débit d'air (50, 50A) se trouve dans la seconde position (P2), **caractérisé en ce que** la seconde plaque (53, 53A) s'étend à partir de l'axe pivotant (51, 51A) à un même angle d'étendue que la première plaque (52, 52A) de telle sorte que la première plaque (52, 52A) et la seconde plaque (53, 53A) sont orientées dans la même direction par rapport à l'axe pivotant (51, 51A).

2. Dispositif de canal pour un véhicule selon la revendication 1, dans lequel la première position (P1) est définie par des premières parties concaves/convexes (32c, 33c, 32cA, 33cA) formées de manière irrégulière sur le premier canal (30, 30A), et la seconde position (P2) est définie par des secondes parties concaves/convexes (42c, 43c, 42cA, 43cA) formées de manière irrégulière sur le second canal (40, 40A).
